# DEMANDE DE BREVET EUROPEEN

(11) **EP 3 299 218 A1**
(43) Date de publication de la demande: **28.03.2018**
(21) Numéro de dépôt: 17189206.0
(22) Date de dépôt: 04.09.2017
(51) Int. Cl.: B60Q 1/068

(54) **DISPOSITIF LUMINEUX POUR VEHICULE AUTOMOBILE**

(30) Priorité: 26.09.2016 FR 1659045
(71) Demandeur: Valeo Vision, 93012 Bobigny Cedex (FR)
(72) Inventeur: PUENTE, Jean-Claude, 93012 BOBIGNY (FR)
(74) Mandataire: Valeo Vision

(57) **Abrégé**

Dispositif lumineux (10) pour véhicule automobile comprenant :
- un support (3) ;
- au moins un module lumineux (5), ledit module lumineux (5) étant monté de façon pivotante autour d'au moins un axe sur le support (3) au moyen d'au moins une liaison pivot (7A) entre le module lumineux (5) et le support (3), ladite liaison pivot (7A) comprenant un élément élastiquement déformable (18) agencé pour autoriser un pivotement du module lumineux (5) par rapport au support (3) autour dudit axe ;
- au moins un moyen de réglage (7B, 7C) du module lumineux (5) agencé pour permettre un pivotement du module lumineux (5) par rapport au support (3) autour dudit axe lorsque le moyen de réglage (7B, 7C) est actionné ;
- un moyen de contrainte (15) agencé pour maintenir le module lumineux (5) en position par rapport au support (3) en l'absence d'actionnement du moyen de réglage (7B, 7C).

## Description

### DOMAINE TECHNIQUE DE L'INVENTION

La présente invention concerne un dispositif lumineux pour véhicule automobile.
Elle trouve une application particulière mais non limitative dans les dispositifs d'éclairage et/ou de signalisation, tels que des projecteurs de véhicule automobile.

### ARRIÈRE-PLAN TECHNOLOGIQUE DE L'INVENTION

Un dispositif lumineux pour véhicule automobile comprend de manière connue de l'homme du métier un support et au moins un module lumineux. Pour régler le positionnement du module lumineux sur le support, des capsules plastiques fixées audit module lumineux sont utilisées. Chaque capsule coopère avec une vis à tête sphérique insérée en force dans ladite capsule. Le module lumineux comporte ainsi un point fixe (liaison rotule) et deux vis pour forcer une rotation dudit module lumineux selon une direction verticale et selon une direction horizontale. Cela permet de régler un faisceau lumineux produit par ledit module lumineux.

Un inconvénient de cet état de la technique est lié à l'évolution de la taille des modules lumineux. En effet, lorsque le dispositif lumineux comprend une pluralité de modules lumineux, ces modules lumineux sont plus petits et les vis et les capsules sont alors presque aussi grosses que les modules lumineux eux-mêmes et ne peuvent donc plus être utilisées. Par ailleurs, la capsule risque de casser si on réduit sa taille.

Dans ce contexte, la présente invention vise à résoudre l'inconvénient précédemment mentionné.

### DESCRIPTION GENERALE DE L'INVENTION

A cette fin l'invention propose un dispositif lumineux pour véhicule automobile, ledit dispositif lumineux pour véhicule automobile comprenant :
- un support ;
- au moins un module lumineux, ledit module lumineux étant monté de façon pivotante autour d'au moins un axe sur le support au moyen d'au moins une liaison pivot entre le module lumineux et le support, ladite liaison pivot comprenant un élément élastiquement déformable agencé pour autoriser un pivotement du module lumineux par rapport au support autour dudit axe ;
- au moins un moyen de réglage du module lumineux agencé pour permettre un pivotement du module lumineux par rapport au support autour dudit axe lorsque le moyen de réglage est actionné ;
- un moyen de contrainte agencé pour maintenir le module lumineux en position par rapport au support en l'absence d'actionnement du moyen de réglage.

Ainsi, comme on va le voir en détail ci-après, plus aucune capsule n'est utilisée. Par ailleurs, l'élément élastiquement déformable facilite le positionnement du dispositif lumineux au niveau de la liaison pivot. Une fois la position du dispositif lumineux réglée, le moyen de contrainte permet de maintenir le module lumineux dans cette position. Le moyen de contrainte est adapté pour absorber les vibrations au niveau de la liaison pivot et empêche ce dernier de se casser.

Selon des modes de réalisation non limitatifs, le module lumineux peut comporter en outre une ou plusieurs caractéristiques supplémentaires parmi les suivantes :
Selon un mode de réalisation non limitatif, la liaison pivot comprend en outre une tige filetée et un écrou de verrouillage.

Selon un mode de réalisation non limitatif, la tige filetée et/ou l'écrou de verrouillage est en acier ou en plastique renforcé en fibres de verre.

Selon un mode de réalisation non limitatif, l'élément élastiquement déformable est adapté pour absorber les variations angulaires du module lumineux lors du réglage de la position dudit module lumineux par le moyen de réglage.

Selon un mode de réalisation non limitatif, l'élément élastiquement déformable est en caoutchouc.

Selon un mode de réalisation non limitatif, ledit dispositif lumineux comprend un moyen de réglage pour un réglage vertical du module lumineux et un moyen de réglage pour un réglage horizontal dudit module lumineux.

Selon un mode de réalisation non limitatif, le moyen de contrainte est indépendant du moyen de réglage.

Selon un mode de réalisation non limitatif, le moyen de réglage comprend une extrémité de contact avec le support, ladite extrémité de contact étant sans arête vive.

Selon un mode de réalisation non limitatif, le moyen de contrainte est un ressort, notamment une lame ressort.

Selon un mode de réalisation non limitatif, le moyen de contrainte est intégré au moyen de réglage.

Selon un mode de réalisation non limitatif, le moyen de contrainte est un ressort.

Selon un mode de réalisation non limitatif, le moyen de réglage est solidaire du support.

Selon un mode de réalisation non limitatif, le moyen de réglage comprend une tige filetée et un pas de vis.

Selon un mode de réalisation non limitatif, le moyen de réglage est solidaire du module lumineux.

Selon un mode de réalisation non limitatif, le moyen de réglage comprend une tige filetée et un écrou.

Selon un mode de réalisation non limitatif, ledit dispositif lumineux comporte un module lumineux, dit module de référence, ledit module de référence étant monté sur le support au moyen de trois liaisons pivots, ledit au moins un module lumineux monté pivotant étant réglé sur le support par rapport audit module de référence.

Selon un mode de réalisation non limitatif, ledit dispositif lumineux comporte une pluralité de modules lumineux et est adapté pour produire un faisceau lumineux segmenté composé de plusieurs segments lumineux, activables sélectivement, un segment lumineux étant généré par un module lumineux.

### BREVE DESCRIPTION DES FIGURES

L'invention et ses différentes applications seront mieux comprises à la lecture de la description qui suit et à l'examen des figures qui l'accompagnent.
- la figure 1 représente schématiquement un dispositif lumineux selon un premier mode de réalisation non limitatif de l'invention, comportant un support et une pluralité de modules lumineux fixés sur ce support ;
- la figure 2 représente schématiquement un montage d'un des modules lumineux du dispositif lumineux de la figure 1 sur le support selon un premier mode de réalisation non limitatif, ledit module lumineux étant fixé par une liaison pivot et deux moyens de réglage, ledit module lumineux étant maintenu en position par un moyen de contrainte distinct de la liaison pivot et des moyens de réglage ;
- la figure 3 représente schématiquement une vue en coupe du module lumineux du dispositif de la figure 2, dans laquelle ledit module lumineux est maintenu par le moyen de contrainte ;
- la figure 4 représente schématiquement un des moyens de réglage du module lumineux des figures 2 et 3 ;
- la figure 5 représente schématiquement un dispositif lumineux selon un deuxième mode de réalisation non limitatif de l'invention, comportant un support et une pluralité de modules lumineux fixés sur ce support ;
- la figure 6 représente schématiquement un montage d'un des modules lumineux du dispositif lumineux de la figure 6 sur le support selon un second mode de réalisation non limitatif, ledit module lumineux étant fixé par une liaison pivot et deux moyens de réglage, ledit module lumineux étant maintenu en position par un moyen de contrainte incorporé à un des moyens de réglage ;
- la figure 7 représente schématiquement une vue en coupe du module lumineux du dispositif de la figure 6, dans laquelle ledit module lumineux est maintenu par le moyen de contrainte agissant en compression, ledit moyen de contrainte étant intégré au moyen de réglage selon une première variante de réalisation non limitative ;
- la figure 8 représente schématiquement une vue en coupe du module lumineux du dispositif de la figure 6, dans laquelle ledit module lumineux est maintenu par le moyen de contrainte agissant en compression, ledit moyen de contrainte étant intégré au moyen de réglage selon une second variante de réalisation non limitative ;
- la figure 9 représente schématiquement la liaison pivot du dispositif lumineux des figures 2 et 6, lorsque le module lumineux est dans une première position ;
- la figure 10 représente schématiquement la liaison pivot du dispositif lumineux des figures 2 et 6, lorsque le module lumineux est dans une deuxième position.

### DESCRIPTION DE MODES DE REALISATION DE L'INVENTION

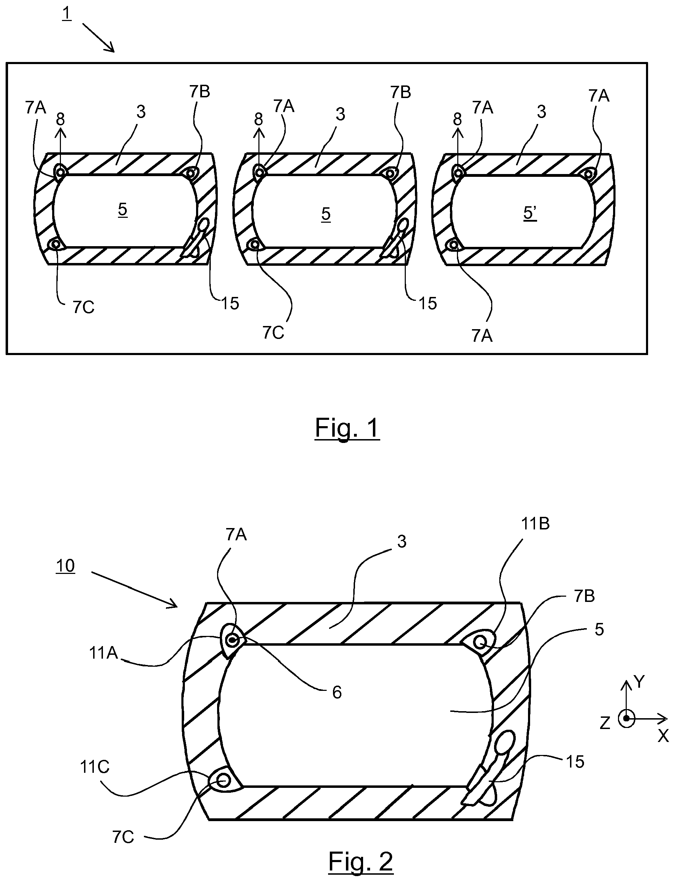

Les éléments identiques, par structure ou par fonction, apparaissant sur différentes figures conservent, sauf précision contraire, les mêmes références.
Le dispositif lumineux 10 pour véhicule automobile selon l'invention est décrit en référence aux figures 1 à 10.
Par véhicule automobile, on entend tout type de véhicule motorisé.

Dans un mode de réalisation non limitatif pris dans la suite de la description, le dispositif lumineux 10 est à un dispositif d'éclairage et/ou de signalisation. Dans une variante de réalisation non limitative, le dispositif d'éclairage et/ou de signalisation est un projecteur de véhicule automobile.

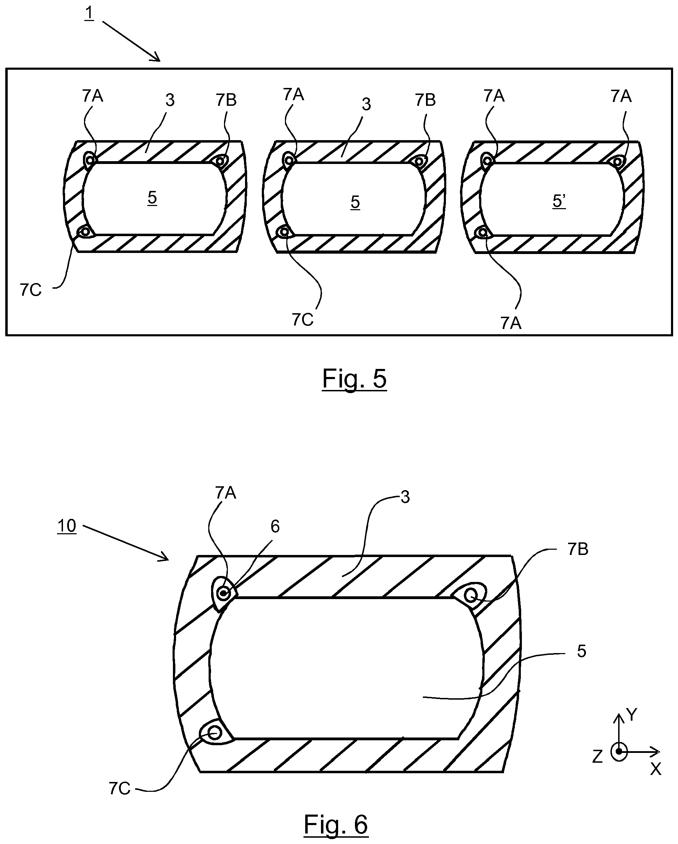

Tel qu'illustré sur les figures 1 ou 5, le dispositif lumineux 10 comprend
- un support 3 ;
- au moins un module lumineux 5 ;
- au moins une liaison pivot 7A adaptée pour monter le module lumineux 5 sur le support 3 de façon pivotante ;
- au moins un moyen de réglage 7B, 7C ; et
- un moyen de contrainte 15.

La liaison pivot 7A permet au module lumineux 5 d'effectuer une rotation selon les directions verticale Y et horizontale Z.

Ledit au moins un moyen de réglage 7B, 7C permet le pivotement du module lumineux 5 par rapport au support 3 autour d'un axe 8 lorsque ledit au moins un moyen de réglage 7B, 7C est actionné.
Dans un mode de réalisation non limitatif, le dispositif lumineux 1 comprend deux moyens de réglage 7B et 7C. Le moyen de réglage 7B et le moyen de réglage 7C permettent respectivement un réglage à l'horizontal et à la verticale du module lumineux 5 par rapport au support 3.

Le moyen de contrainte 15 permet de maintenir le module lumineux 5 en position par rapport au support 3, une fois le réglage horizontal et le réglage vertical du module lumineux 5 effectués. Ce maintien est réalisé en l'absence d'actionnement du moyen de réglage 7B, 7C.

Dans un mode de réalisation non limitatif, le dispositif lumineux 10 comprend une pluralité de modules lumineux 5 adaptés pour être montés sur un support 3 chacun par l'intermédiaire d'une liaison pivot 7A et au moins un moyen de réglage 7B, 7C.
Dans l'exemple non limitatif illustré sur les figures 1 et 5, le dispositif lumineux 10 comprend trois modules lumineux 5 adaptés pour être montés sur un support 3 chacun par l'intermédiaire d'une liaison pivot 7A et de deux moyens de réglage 7B, 7C.

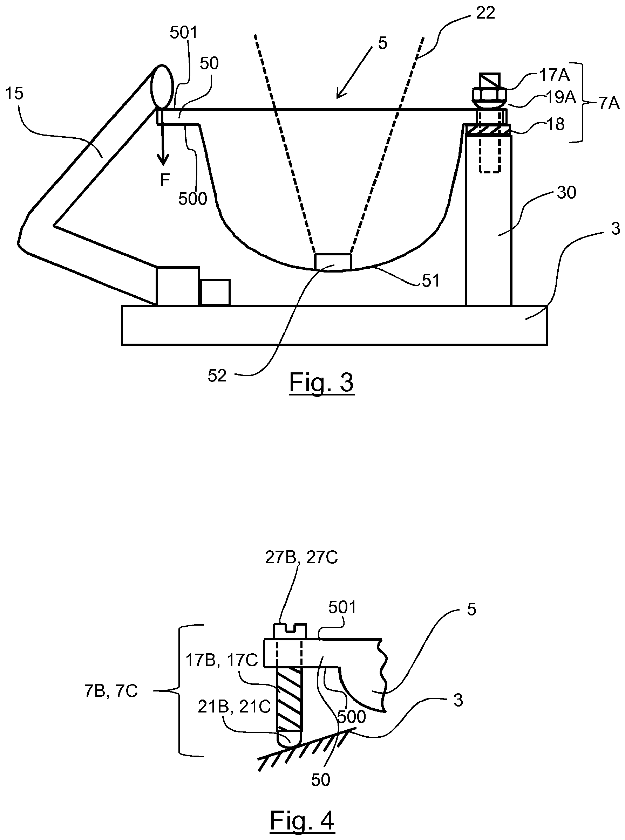

Dans un mode de réalisation non limitatif illustré sur les figures 1 et 5, le dispositif lumineux 10 comprend en outre un module lumineux 5' adapté pour servir de module de référence pour le positionnement des autres modules lumineux 5 dans le dispositif lumineux 10. Dans ce cas, le module lumineux de référence comporte trois liaisons pivots 7A qui sont réglées de la même manière (au même niveau). Ces trois liaisons pivots forment ainsi trois points fixes. Ce module de référence 5' est positionné selon l'axe de la route en fonction de la fonction photométrique déterminée.
Ainsi, le segment lumineux 22 produit par ce module lumineux de référence 5' sert de segment lumineux de référence pour le réglage des autres segments lumineux 22 (illustrés sur la figure 3, 7 ou 8) des autres modules lumineux 5. Les autres segments lumineux 22 peuvent ainsi être réglés en vertical et à l'horizontal de sorte à être alignés sur le segment lumineux de référence et de sorte à créer un faisceau lumineux segmenté composé de plusieurs segments lumineux 22, activables sélectivement.
Grâce à la liaison pivot 7A et aux moyens de réglages 7B, 7C, chaque module lumineux 5 peut être réglé par rapport au module de référence 5' de façon indépendante des autres modules lumineux 5.

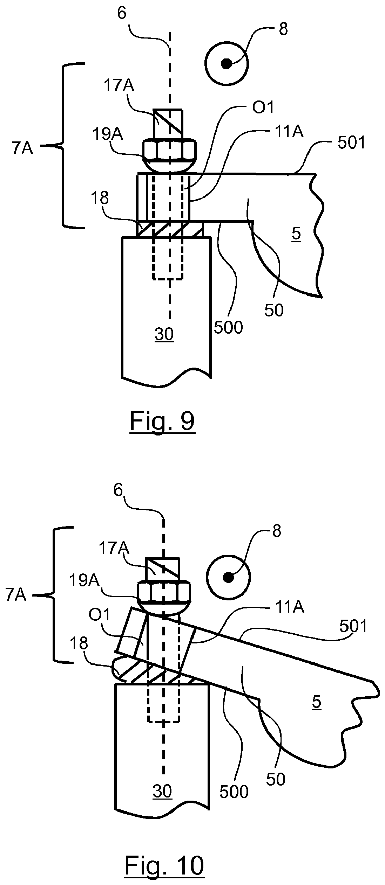

Le dispositif lumineux 1 est illustré selon un premier mode de réalisation non limitatif illustré aux figures 1 à 4 et selon un deuxième mode de réalisation non limitatif illustré aux figures 5 à 8.
La liaison pivot 7A illustrée sur les figures 9 et 10 s'applique à ces deux modes de réalisation non limitatifs.

Selon le premier mode de réalisation non limitatif du dispositif lumineux 1 :
- le(s) module(s) lumineux 5 comprend un moyen de contrainte 15 illustré sur les figures 2 et 3 qui est distinct dudit au moins un moyen de réglage 7B, 7C, à savoir il n'est pas intégré dans ledit au moins un moyen de réglage 7B, 7C.
- le(s) module(s) lumineux 5 comprend deux moyens de réglage 7B, 7C selon une premier mode de réalisation non limitatif illustrés sur la figure 4;

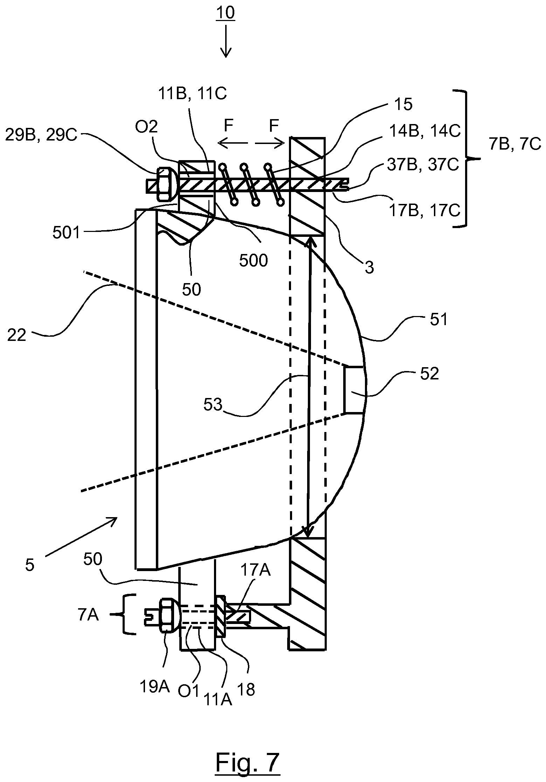

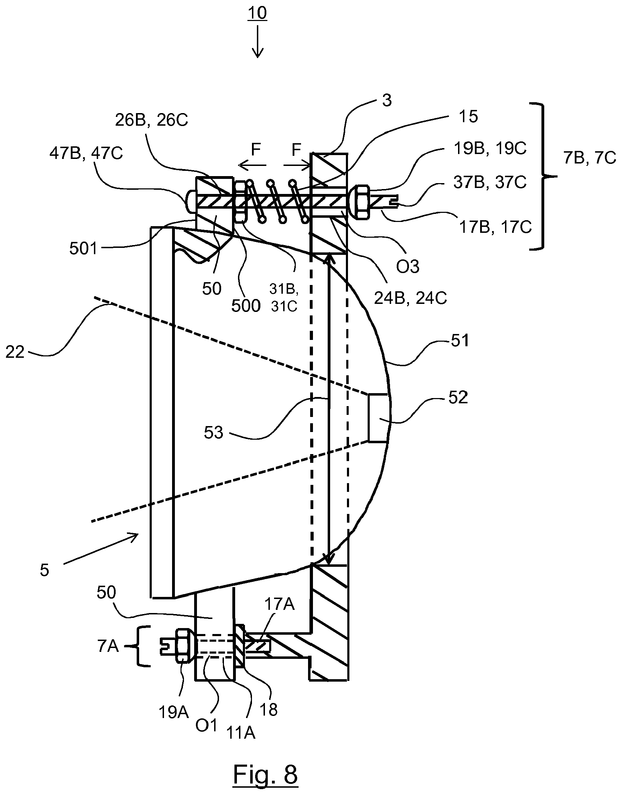

Selon le deuxième mode de réalisation non limitatif du dispositif lumineux 1 :
- le(s) module(s) lumineux 5 comprend un moyen de contrainte 15 qui fait partie dudit au moins un moyen de réglage 7B, 7C ;
- le(s) module(s) lumineux 5 comprend deux moyens de réglage 7B, 7C :
   - selon une première variante non limitative illustrée sur la figure 7 dans laquelle les moyens de réglage 7B, 7C sont solidaires du support 3 ; ou
   - selon une deuxième variante non limitative illustrée sur la figure 8 dans laquelle les moyens de réglage 7B, 7C sont solidaires du module lumineux 5.

Les différents éléments du dispositif lumineux 10 sont décrits en détail ci-après selon les différents modes de réalisation non limitatifs.

### ∘ Module lumineux

Comme illustré sur les figures 3, 8 et 9, un module lumineux 5 comprend :
- une base 50 adaptée pour permettre la fixation du module lumineux 5 sur le support 3 ;
- un moyen optique 51;
- une source lumineuse 52 comprenant des moyens d'émission de lumière (non illustrés) et adaptée pour émettre des rayons lumineux formant un segment lumineux 22.

Lorsque le dispositif lumineux 10 comporte une pluralité de module lumineux 5 tels qu'illustrés sur la figure 1 ou la figure 6, lesdits modules lumineux 5 forment une matrice. L'ensemble des segments lumineux 22 des différents modules lumineux 5 forme alors un faisceau lumineux segmenté appelé également faisceau lumineux matriciel. Les segments lumineux 22 sont activables sélectivement, à savoir ils peuvent être générés de façon indépendante les uns des autres.
Dans un exemple non limitatif, le faisceau lumineux segmenté du dispositif lumineux 10 est adapté pour assurer une fonction photométrique dite « high beam » pour réaliser un feu de route. Dans un autre exemple non limitatif, le faisceau lumineux segmenté du dispositif lumineux 10 est adapté pour assurer une fonction photométrique dite « low beam » pour réaliser, par exemple, un feu de croisement.

Dans un mode de réalisation non limitatif, le moyen optique 51 est :
- un réflecteur ; et/ou
- une lentille.
Le moyen optique 51 coopère avec la source lumineuse 52 décrite ci-après pour former le segment lumineux 22.

Dans l'exemple non limitatif illustré sur les figures 3, 8 et 9, le moyen optique 51 est un réflecteur solidaire de la base 50 du module lumineux 5.

Dans un mode de réalisation non limitatif illustré sur les figures 8 et 9, le support 3 du dispositif lumineux 10 comprend une ouverture 53 par laquelle traverse le segment lumineux 22.

Outre les moyens d'émission de lumière, la source lumineuse 52 comprend une interface de connexion électrique (non illustrée). L'interface de connexion électrique est adaptée pour l'alimentation électrique et le pilotage des moyens d'émission de lumière. L'interface de connexion électrique est adaptée pour coopérer avec un connecteur électrique externe qui permet d'envoyer des commandes de pilotage à la source lumineuse 52 et de l'alimenter.
Dans un mode de réalisation non limitatif, les moyens d'émission de lumière comportent au moins une puce émettrice semi-conductrice.
Dans une variante de réalisation non limitative, une puce émettrice semi-conductrice fait partie d'une diode électroluminescente. Par diode électroluminescente, on entend tout type de diodes électroluminescentes, que ce soit dans des exemples non limitatifs des LED (« Light Emitting Diode »), une OLED (« Organic LED ») ou une AMOLED (« Active-Matrix-Organic LED »), ou encore une FOLED (« Flexible OLED »). En variante, les moyens d'émission de lumière peuvent comprendre une source laser associée à un élément de conversion de longueur d'onde, tel un matériau photoluminescent.

### ∘ Support du dispositif lumineux

Dans un mode de réalisation non limitatif, le support 3 du dispositif lumineux 10 est un boîtier du dispositif lumineux 10.

Dans un autre mode de réalisation non limitatif, le support 3 du dispositif lumineux 10 est une platine intermédiaire sur laquelle est fixé le(s) module(s) lumineux 5.

Dans les figures 1 à 12, dans un mode de réalisation non limitatif, chaque module lumineux 5 est fixé au support 3 par :
- une liaison pivot 7A ;
- deux moyens de réglage 7B, 7C.

### ∘ Liaison pivot

La liaison pivot 7A permet au module lumineux 5 d'effectuer une rotation selon les directions verticale Y et horizontale Z.
La liaison pivot est également appelée point fixe.

Comme illustré aux figures 9 et 10, dans un mode de réalisation non limitatif, la liaison pivot 7A comprend :
- une tige filetée 17A ;
- un écrou de verrouillage 19A ; et
- un élément élastiquement déformable 18.

Ces différents éléments sont décrits en détail ci-dessous.

Dans un mode de réalisation non limitatif, la tige filetée 17A est en acier ou en plastique renforcé en fibres de verre. Ce matériau est peu coûteux.

La tige filetée 17A est solidaire d'un bossage 30 du support 3. La tige filetée 17A est adaptée pour s'insérer dans la base 50 et permet ainsi de relier le module lumineux 5 au support 3.
Dans un mode de réalisation non limitatif, le bossage 30 du support 3 est de forme cylindrique.

La base 50 comprend un orifice de passage 11A pour la tige filetée 17A. Cet orifice 11A présente une largeur supérieure à la tige filetée 17A de sorte qu'il existe un jeu O1 entre la tige filetée 17A et les parois dudit orifice 11A.
La tige filetée 17A et le bossage 30 s'étendent le long d'un axe 6.

Dans un mode de réalisation non limitatif, l'orifice 11A comprend un diamètre inférieur à cinq millimètres.

L'écrou de verrouillage 19A permet le verrouillage du module lumineux 5 sur le support 3. Cet écrou de verrouillage 19A est adapté pour être vissé sur la tige filetée 17A. Il comprend pour cela un pas de vis complémentaire au filetage de la tige filetée 17A. Le serrage de l'écrou de verrouillage 19A est réalisé de sorte que cet écrou de verrouillage :
- ne bloque pas la rotation du module lumineux 5 autour d'un axe 8 dit axe de rotation. Cet axe de rotation 8 est perpendiculaire à l'axe 6. Le module lumineux 5 peut ainsi pivoter autour de cet axe de rotation 8 lors de son réglage par les moyens de réglage 7B, 7C (décrits plus loin) ;
- est en contact avec la base 50, en particulier avec sa face supérieure 501.
Ainsi, l'écrou de verrouillage 19A n'est pas vissé à fond sur la tige filetée 17A de sorte qu'il est possible de faire tourner le module lumineux 5 autour de l'axe de rotation 8.
Dans un mode de réalisation non limitatif, l'écrou de verrouillage 19A est en acier ou en plastique renforcé en fibres de verre.

L'élément élastiquement déformable 18 est disposé entre la base 50 du module lumineux 5 et le bossage 30 du support 3. En particulier, l'élément élastiquement déformable 18 est en contact avec la face inférieure 500 de la base 50.
A la figure 9, l'élément élastiquement déformable 18 est écrasé uniformément par le module lumineux 5. Le module 5 est dans une première position dans laquelle par exemple le segment lumineux 22 du module lumineux 5 n'est pas encore réglé par rapport au segment lumineux 22 du module de référence 5' de sorte à obtenir le faisceau lumineux matriciel voulu.

A la figure 10, le module lumineux 5 a été réglé dans une deuxième position différente de la première position. Il a pivoté autour de l'axe de rotation 8. L'écrasement de l'élément élastiquement déformable 18 n'est alors plus uniforme. Une partie de l'élément élastiquement déformable 18 est presque totalement écrasée. Ainsi, l'élément élastiquement déformable 18 se comprime tout ou partie de sorte à accompagner et permettre le pivotement du module lumineux 5 autour de l'axe de rotation 8.
L'élément élastiquement déformable 18 est ainsi adapté pour absorber les variations angulaires du module lumineux 5 lors du réglage de la position de ce module lumineux 5 par le(s) moyen(s) de réglage 7B, 7C.
Dans un mode de réalisation non limitatif l'élément élastiquement déformable 18 est en caoutchouc.
On notera que le jeu O1 qui existe entre la tige filetée 17A et les parois de l'orifice 11A permet de ne pas bloquer le pivotement du module lumineux 5.

On notera que dans le cas d'un module lumineux qui sert de module de référence 5', ledit module lumineux comprend des liaisons pivots 7A qui ne comprennent pas d'élément élastiquement déformable 18. En effet, dans ce cas, le module de référence ne pivote pas autour de l'axe 8 car il est monté fixe sur le support 3.

### ∘ Moyen de réglage

Dans un mode de réalisation non limitatif, le module lumineux 5 comprend deux moyens de réglage 7B, 7C.
Le moyen de réglage 7B est adapté pour bloquer horizontalement le module lumineux 5, c'est-à-dire bloquer ledit module lumineux 5 selon une direction Z, appelée direction horizontale ou latérale tel qu'illustré sur les figures 2 et 6.
Le moyen de réglage 7C est adapté pour bloquer verticalement le module lumineux 5, c'est-à-dire bloquer ledit module lumineux 5 selon une direction

Y, appelée direction verticale tel qu'illustré sur les figures 2 et 6.

Les moyens de réglage 7B, 7C sont décrits ci-après selon deux modes de réalisation non limitatifs7B7C.

### ▪ Premier mode de réalisation :

La figure 4 illustre un premier mode de réalisation non limitatif des moyens de réglage 7B, 7C. Dans ce mode de réalisation, les moyens de réglage 7B, 7C sont une tige filetée.

La tige filetée 7B, 7C comprend :
- un filetage 17B, 17C ;
- une tête de tige 27B, 27C ;
- une extrémité de contact 21B, 21C.
Le filetage 17B, 17C est adapté pour être vissée dans la base 50 du module lumineux 5.
A cet effet, la base 50 comporte deux pas de vis adaptés pour recevoir respectivement le filetage 17A et 17C.
La tête de tige 27B, 27C est adaptée pour être contact avec le module lumineux 5, et l'extrémité de contact 21B, 21C de la tige filetée est adaptée pour être en contact avec le support 3, en particulier pour être en appui sur ledit support 3. En fonction du degré de vissage de la tige filetée 7B, 7C dans la base 50, on règle la position du module lumineux 5 par rapport à ce support 3. En effet, lors du vissage, la tête de tige 27B, 27C pousse sur la base 50 du module lumineux 5 (en particulier sur sa face supérieure 501) qui se déplace respectivement à l'horizontale ou à la verticale et pivote autour de l'axe de rotation 8 grâce à la liaison pivot 7A.

Dans un mode de réalisation non limitatif, l'extrémité de contact 21B, 21C est sans arête vive. Cela permet d'avoir un contact sans accroc entre l'extrémité de contact 21B, 21C et le support 3. On évite ainsi d'avoir un point de contrainte sur le support 3. La tige filetée 17B, 17C ne risque pas de se bloquer dans le support 3 et ainsi ne risque pas de se casser.

Dans ce premier mode de réalisation illustré sur les figures 1 à 3, les moyens de réglage 7B, 7C ne comprennent pas de moyen de contrainte 15. Ainsi le moyen de contrainte 15 et les moyens de réglage 7B, 7C sont distincts. Dans le mode de réalisation du dispositif lumineux 1 des figures 1 à 4, le moyen de contrainte 15 est disposé sur un côté du support 3 opposé à la liaison pivot 7.
Dans un mode de réalisation non limitatif, le moyen de contrainte 15 est un ressort, notamment une lame ressort. Cette lame ressort est en contact avec le module lumineux 5 ; elle exerce une force de pression F sur le module lumineux 5, en particulier sur la face supérieure 501 de sa base 50 tel qu'illustré sur la figure 3. La lame ressort 15 permet d'absorber les mouvements de la liaison pivot 7A. Elle évite ainsi à la liaison pivot 7A de vibrer ou de casser.

### ▪ Second mode de réalisation :

Les figures 5 à 8 illustrent un second mode de réalisation des moyens de réglage 7B, 7C. Dans ce second mode de réalisation, le moyen de contrainte 15 est intégré aux moyens de réglage 7B, 7C.

Sur les figures 7 et 8, dans un mode de réalisation non limitatif, le moyen de contrainte 15 est un ressort disposé entre le module lumineux 5 et le support 3. Ce ressort 15 agit en compression, c'est-à-dire qu'il exerce une force F sur le module lumineux 5 et sur le support 3.

### Première variante de réalisation du second mode de réalisation :

La figure 7 illustre une première variante de réalisation du second mode de réalisation. Dans cette première variante, le moyen de réglage 7B, 7C est solidaire du support 3.

Le moyen de réglage 7B, 7C comprend une tige filetée 17B, 17C et un pas de vis 14B, 14C. Le pas de vis 14B, 14C fait partie du support 3 et la tige filetée 17B, 17C vient se visser dans ledit pas de vis 14B, 14C de sorte qu'elle est solidaire de ce support 3.
La tige filetée 17B, 17C comprend une extrémité 37B, 37C adaptée pour coopérer avec une tête de tournevis.
La tige filetée 17B, 17C est bloquée sur le module lumineux 5 par un écrou de verrouillage 29B, 29C qui est en contact avec la base 50.
Dans un mode de réalisation non limitatif, la surface de l'écrou de verrouillage 29B, 29C qui est en contact avec la base 50 est sans arête vive. Cela permet d'absorber les variations d'angle lorsque le module lumineux 5 est réglé horizontalement ou verticalement.

Le montage du module lumineux 5 sur le support 3 par l'intermédiaire des moyens de réglage 7B, 7C et de la liaison pivot 7A est effectué comme suit.

Dans une première étape, la tige filetée 17B, 17C est vissée dans le support 3. Elle coopère avec un pas de vis 14B, 14C dudit support 3. Le ressort 15 est ensuite disposé autour de la tige filetée 17B, 17C de sorte que l'axe du ressort 15 est confondu avec l'axe de la tige filetée 17B, 17C. L'élément élastiquement déformable 18 est disposé autour de la tige filetée 17A de la liaison pivot 7A et repose sur le bossage 30 du support 3.
Dans une seconde étape, la tige filetée 17B, 17C est insérée dans l'orifice 11B, 11C de la base 50 du module lumineux 5. Le ressort 15 est ainsi pris en sandwich entre le la base 50 du module lumineux 5 et le support 3. On notera que dans un mode de réalisation non limitatif, l'orifice 11B, 11C comprend des parois lisses. Le diamètre de cet orifice 11B, 11C est supérieur au diamètre de la tige filetée 17B, 17C afin de laisser un jeu 02 pour le passage de la tige filetée 17B, 17C. Le jeu O2 permet d'absorber les variations d'angle lorsque le module lumineux 5 est réglé horizontalement ou verticalement.

Dans le même temps, la tige filetée 17A de la liaison pivot 7A est insérée dans l'orifice 11A de la base 50 prévu à cet effet.
Dans une troisième étape, on vient visser l'écrou de verrouillage 29B, 29C sur la tige filetée 17B, 17C pour bloquer ladite tige filetée sur la base 50 et donc sur le module lumineux 5. L'écrou de verrouillage 29B, 29C vient appuyer sur la base 50 en particulier sur sa face supérieure 501. On notera que la base 50 du module lumineux 5 est bloquée entre le ressort 15 et l'écrou 29B, 29C.
Dans une quatrième étape, on vient visser l'écrou 19A sur la tige 17A de la liaison pivot 7A.
Dans une cinquième étape, afin de régler le module lumineux 5 respectivement à l'horizontale, à la verticale, on ajuste le vissage de la tige filetée 17B, 17C au moyen de son extrémité 37B, 37C (via un tournevis) ce qui rapproche le module lumineux 5 du support 3. Le module lumineux 5 pivote par rapport au support 3 autour de l'axe 8 vu précédemment. Ce rapprochement (qui correspond au pivotement) met en compression le ressort 15 associé à chaque tige filetée 17B, 17C. L'élément élastiquement déformable 18 et également mis en compression en raison du pivotement du module lumineux 5. Le jeu O1 permet d'absorber les variations d'angle lorsque le module lumineux 5 pivote.

Lorsque la tige filetée 17B, 17C n'est plus en mouvement (à savoir elle n'est plus actionnée), le ressort 15 qui est en compression appuie sur le support 3 et sur la base 50 du module lumineux 5 de sorte qu'il maintient ledit module lumineux 5 en position par rapport au support 3.
De plus, le ressort 15 évite à la tige filetée 17B, 17C de se dévisser. Enfin, le ressort 15 permet d'absorber les vibrations qui peuvent se produire sur ladite tige filetée 17B, 17C, notamment lorsque le véhicule automobile roule.
Bien entendu, dans un autre mode de réalisation non limitatif, le montage peut débuter par l'insertion de la tige filetée 17B, 17C dans l'orifice 11B, 11C de la base 50 du module lumineux 5.

### Seconde variante de réalisation du second mode de réalisation :

La figure 8 illustre une seconde variante de réalisation du second mode de réalisation. Dans cette seconde variante, le moyen de réglage 7B, 7C est solidaire du module lumineux 5.
Le moyen de réglage 7B, 7C comprend une tige filetée 17B, 17C et un écrou 19B, 19C.
L'écrou de 19B, 19C est adapté pour être en contact avec le support 3. Il permet d'ajuster le réglage du module lumineux 5.
Dans un mode de réalisation non limitatif, la surface de l'écrou de 19B, 19C est sans arête vive. Cela permet d'absorber les variations d'angle lorsque le module lumineux 5 est réglé horizontalement ou verticalement.

La tige filetée 17B, 17C comprend :
- une tête 47B, 47C qui est adaptée pour coopérer avec la base 50 du module lumineux 5 et ;
- une extrémité 37B, 37C qui et adaptée pour traverser le support 3.

La tige filetée 17B, 17C est solidarisée avec le module lumineux 5 par l'intermédiaire d'un écrou de verrouillage 31B, 31C.

Le montage du module lumineux 5 sur le support 3 par l'intermédiaire des moyens de réglage 7B, 7C et de la liaison pivot 7A est effectué comme suit.

Dans une première étape, la tige filetée 17B, 17C est vissée dans la base 50 du module lumineux 5 de sorte que sa tête 47B, 47C repose sur la base 50, en particulier sa face extérieure 501. Elle coopère avec un pas de vis 26B, 26C de la base 50. Puis on visse l'écrou de verrouillage 31B, 31C sur la face opposée 500 de la base 50 pour bloquer ladite tige filetée sur la base 50 et donc sur le module lumineux 5. Le ressort 15 est ensuite disposé autour de la tige filetée 17B, 17C de sorte que l'axe du ressort 15 est confondu avec l'axe de la tige filetée 17B, 17C. L'élément élastiquement déformable 18 est disposé autour de la tige filetée 17A de la liaison pivot 7A et repose sur le bossage 30 du support 3.
Dans une seconde étape, la tige filetée 17B, 17C est introduite dans un orifice 24B, 24C du support 3. Le diamètre de cet orifice est supérieur au diamètre de la tige filetée 17B, 17C afin de laisser un jeu 03 pour le passage de la tige filetée 17B, 17C. On notera que dans un mode de réalisation non limitatif, l'orifice 24B, 24C comprend des parois lisses.
Le jeu O3 permet d'absorber les variations d'angle lorsque le module lumineux 5 est réglé horizontalement ou verticalement.
On notera que le ressort 15 se retrouve pris en sandwich entre le support 3 et la base 50 (via l'écrou 31B, 31C) du module lumineux 5.
Dans le même temps, la tige filetée 17A de la liaison pivot 7A est insérée dans l'orifice 11A de la base 50 prévu à cet effet.
Dans une troisième étape, on vient visser l'écrou 19B, 19C sur la tige filetée 17B, 17C. Cet écrou 19B, 19C vient appuyer sur le support 3. On notera que le support 3 est bloqué entre le ressort 15 et l'écrou 19B, 19C.
Dans une quatrième étape, on vient visser l'écrou 19A sur la tige 17A de la liaison pivot 7A.
Dans une cinquième étape, afin de régler le module lumineux 5 respectivement à l'horizontale, à la verticale, on tourne l'écrou 19B, 19C ce qui rapproche le module lumineux 5 du support 3 et permet ainsi de le régler. Le module lumineux 5 pivote par rapport au support 3 autour de l'axe 8 vu précédemment. Ce rapprochement (qui correspond au pivotement) met en compression le ressort 15 associé à chaque tige filetée 17B, 17C. L'élément élastiquement déformable 18 est également mis en compression en raison du pivotement du module lumineux 5.
Le jeu O1 permet d'absorber les variations d'angle lorsque le module lumineux 5 pivote. Lorsque la tige filetée 17B, 17C n'est plus en mouvement (à savoir elle n'est plus actionnée), le ressort 15 qui est en compression appuie sur le support 3 et sur la base 50 (via l'écrou 31B, 31C) du module lumineux 5 de sorte qu'il maintient ledit module lumineux 5 en position par rapport au support 3.
Bien entendu, dans un autre mode de réalisation non limitatif, le montage peut débuter par l'insertion de la tige filetée 17B, 17C dans l'orifice 24B, 24C du support 3 module lumineux 5.

Bien entendu, la description de l'invention n'est pas limitée aux modes de réalisation décrits ci-dessus.
Ainsi, dans un autre mode de réalisation non limitatif, le nombre de modules lumineux 5 dans le dispositif lumineux 10 est égal à deux ou supérieur à 3. Ainsi, dans le cas de la seconde variante de réalisation du second mode de réalisation du moyen de réglage 7B, 7C (figure 8), dans un mode de réalisation non limitatif, le moyen de réglage 7B, 7C peut en outre comporter un joint d'étanchéité disposé entre l'écrou 19B, 19C et le support 3.
Ainsi, dans le cas de la première variante de réalisation du second mode de réalisation du moyen de réglage 7B, 7C (figure 7), dans un mode de réalisation non limitatif, le moyen de réglage 7B, 7C peut en outre comporter un joint d'étanchéité disposé entre l'écrou de verrouillage 29B, 29C et la base 50.

Ainsi, l'invention décrite présente notamment les avantages suivants :
- le réglage de la position des modules lumineux dans le dispositif lumineux est simple à effectuer :
- elle permet de proposer une solution de réglage qui s'adapte à de petits modules lumineux ;
- elle permet d'absorber les vibrations qui pourraient survenir lorsque le véhicule automobile roule ;
- elle permet de régler de façon indépendante différents modules lumineux du dispositif lumineux.

## Revendications

1. Dispositif lumineux (10) pour véhicule automobile comprenant :
- un support (3) ;
- au moins un module lumineux (5), ledit module lumineux (5) étant monté de façon pivotante autour d'au moins un axe (8) sur le support (3) au moyen d'au moins une liaison pivot (7A) entre le module lumineux (5) et le support (3), ladite liaison pivot (7A) comprenant un élément élastiquement déformable (18) agencé pour autoriser un pivotement du module lumineux (5) par rapport au support (3) autour dudit axe (8) ;
- au moins un moyen de réglage (7B, 7C) du module lumineux (5) agencé pour permettre un pivotement du module lumineux (5) par rapport au support (3) autour dudit axe (8) lorsque le moyen de réglage (13) est actionné ;
- un moyen de contrainte (15) agencé pour maintenir le module lumineux (5) en position par rapport au support (3) en l'absence d'actionnement du moyen de réglage (7B, 7C).

2. Dispositif lumineux (10) selon la revendication 1, dans lequel la liaison pivot (7A) comprend en outre une tige filetée (17A) et un écrou de verrouillage (19A).

3. Dispositif lumineux selon l'une quelconque des revendications 1 à 2, dans lequel l'élément élastiquement déformable (18) est adapté pour absorber les variations angulaires du module lumineux (5) lors du réglage de la position dudit module lumineux (5) par le moyen de réglage (7B, 7C).

4. Dispositif lumineux (10) selon l'une quelconque des revendications 1 à 3, dans lequel ledit dispositif lumineux (10) comprend un moyen de réglage (7C) pour un réglage vertical du module lumineux (5) et un moyen de réglage (7B) pour un réglage horizontal dudit module lumineux (5).

5. Dispositif lumineux (10) selon l'une quelconque des revendications 1 à 4, dans lequel le moyen de contrainte (15) est indépendant du moyen de réglage (7B, 7C).

6. Dispositif lumineux selon la revendication 5, dans lequel le moyen de réglage (7B, 7C) comprend une extrémité de contact (21B, 21C) avec le support (3), ladite extrémité de contact (21B, 21C) étant sans arête vive.

7. Dispositif lumineux (10) selon la revendication 5 ou 6, dans le moyen de contrainte (15) est un ressort, notamment une lame ressort.

8. Dispositif lumineux (10) selon l'une quelconque des revendications 1 à 4, dans lequel le moyen de contrainte (15) est intégré au moyen de réglage (7B, 7C).

9. Dispositif lumineux (10) selon la revendication 8, dans lequel le moyen de contrainte (15) est un ressort.

10. Dispositif lumineux (10) selon la revendication 8 ou la revendication 9, dans lequel le moyen de réglage (7B, 7C) est solidaire du support (3).

11. Dispositif lumineux (10) selon la revendication 10, dans lequel le moyen de réglage (7B, 7C) comprend une tige filetée (17B, 17C) et un pas de vis (14B, 14C).

12. Dispositif lumineux (10) selon la revendication 8 ou la revendication 9, dans lequel le moyen de réglage (7B, 7C) est solidaire du module lumineux (5).

13. Dispositif lumineux (10) selon la revendication 12, dans lequel le moyen de réglage (7B, 7C) comprend une tige filetée (17B, 17C) et un écrou (19B, 19C).

14. Dispositif lumineux (10) selon l'une quelconque des revendications 1 à 13, dans lequel ledit dispositif lumineux (10) comporte un module lumineux, dit module de référence (5'), ledit module de référence (5') étant monté sur le support (3) au moyen de trois liaisons pivots (7A), ledit au moins un module lumineux monté pivotant (5) étant réglé sur le support (3) par rapport audit module de référence (5').

15. Dispositif lumineux (10) selon l'une quelconque des revendications 1 à 14, dans lequel ledit dispositif lumineux (10) comporte une pluralité de modules lumineux (5, 5') et est adapté pour produire un faisceau lumineux segmenté composé de plusieurs segments lumineux (22), activables sélectivement, un segment lumineux (22) étant généré par un module lumineux (5, 5').
